# FASCICULE DE BREVET EUROPEEN

(11) **EP 3 710 679 B1**
(45) Date de publication et mention de la délivrance du brevet: **09.02.2022**
(21) Numéro de dépôt: 18803404.5
(22) Date de dépôt: 13.11.2018
(51) Int. Cl.: F01D 5/08, F02C 6/08

(54) **DISPOSITIF DE MAINTIEN D'UN ORGANE DE PRELEVEMENT D'AIR RADIAL CENTRIPETE**
VORRICHTUNG ZUM HALTEN EINES RADIALEN ZENTRIPETALEN ELEMENTS ZUR LUFTPROBENENTNAHME
DEVICE FOR HOLDING A RADIAL CENTRIPETAL AIR SAMPLING MEMBER

(30) Priorité: 14.11.2017 FR 1760693
(43) Date de publication de la demande: 23.09.2020
(73) Titulaire: Safran Aircraft Engines, 75015 Paris (FR)
(72) Inventeur: DELAHAYE, Thomas, Nolwenn, Emmanuel, 77550 Moissy-Cramayel (FR); BROMANN, Alain, Marc, Lucien, 77550 Moissy-Cramayel (FR); GOMES PEREIRA, Liliana, 77550 Moissy-Cramayel (FR); PARENT, Delphine, Hermance, Maxime, 77550 Moissy-Cramayel (FR); BENDERRADJI, Kamel, 77550 Moissy-Cramayel (FR)
(74) Mandataire: Gevers & Orès
(86) Numéro de dépôt international: PCT/EP2018/081003
(87) Numéro de publication internationale: WO 2019/096757

(56) Documents cités:
- EP-A1- 1 750 012
- EP-A1- 3 135 864
- FR-A1- 2 825 413
- US-A- 5 472 313
- US-A1- 2007 053 770

## Description

### 1. Domaine de l'invention

La présente invention concerne le domaine des dispositifs de maintien d'un organe de prélèvement d'air radial centripète d'un disque de rotor, en particulier d'un compresseur de turbomachine. L'invention vise également un ensemble de rotor comprenant un tel dispositif, un compresseur comprenant un tel ensemble et une turbomachine comprenant un tel compresseur.

### 2. Etat de la technique

Une turbomachine telle qu'un turbopropulseur ou un turboréacteur comprend une veine primaire dans laquelle circule d'amont en aval un flux primaire. La turbomachine comprend un ensemble de compresseur, une chambre de combustion et un ensemble de turbine qui sont traversés par le flux primaire. L'ensemble de compresseur comprenant un ou plusieurs étages de compresseur. Chaque étage de compresseur comprend de manière alternée une rangée d'aubes de stator et une rangée d'aubes mobiles solidaires chacune d'un disque et qui sont traversées par le flux primaire. Certains organes de la turbomachine nécessitent d'être refroidis pour un bon fonctionnement de celle-ci tels qu'une turbine haute pression. Des organes de prélèvement d'air d'orientation radiale permettent d'effectuer des prélèvements d'air au niveau de la veine d'air du compresseur et de l'acheminer vers lesdits organes nécessitant d'être refroidis. A cet effet, une virole annulaire d'un disque délimitant une partie de la paroi interne de la veine primaire comprend des orifices qui permettent un passage d'air de la veine primaire vers plusieurs organes de prélèvement centripètes disposés circonférentiellement autour de l'axe de la turbomachine et qui sont chacun orienté vers un des orifices. Ces organes de prélèvement d'air sont supportés généralement entre deux disques du compresseur par un dispositif de maintien.

Un exemple de dispositif de maintien d'organes de prélèvement d'air est décrit dans le document FR-A1-2825413. Dans ce document, chaque organe de prélèvement d'air est porté par un dispositif de maintien annulaire ayant une paroi radiale arrière et une paroi radiale avant. La paroi radiale arrière est fixée au moyen d'un boulon sur une patte radiale d'un disque aval du compresseur et la paroi radiale avant est équipée d'une première nervure axiale en contact avec une deuxième nervure axiale du disque aval. Cependant, une telle configuration nécessite un espace axial entre l'organe de prélèvement d'air et la paroi arrière à cause de la liaison boulonnée, ce qui encombre l'espace déjà réduit entre les disques de compresseur. La liaison boulonnée impacte également la masse de la turbomachine car plus le nombre d'organes de prélèvement d'air est élevé plus le nombre de liaisons boulonnées est important. Le dispositif de maintien implique également un problème de maintien des organes de prélèvement lors de la rotation de la turbomachine et en particulier sous l'action de la force centrifuge.

Le document EP-B1-1750012 décrit également un dispositif de butée pour maintenir les organes de prélèvement agencés chacun dans un logement d'une virole intérieure annulaire suivant l'axe d'un disque de rotor. Chaque organe de prélèvement comporte une collerette solidaire de celui-ci et qui est reçue dans une rainure latérale annulaire de la virole intérieure. La collerette comprend un méplat en contact avec une butée annulaire engagée dans une gorge annulaire d'orientation radiale de la virole intérieure du disque. Cependant, une telle configuration est complexe à mettre en oeuvre car le dispositif de maintien présente des agencements à prendre en compte lors du montage des organes de prélèvement. En effet, le méplat doit permettre l'insertion dans la virole intérieure via une découpure et l'organe de prélèvement doit pivoter d'environ 180° pour qu'une partie de la collerette s'engage dans la rainure latérale de la virole intérieure. Puis, la butée annulaire est engagée dans la gorge annulaire pour immobiliser axialement chaque organe de prélèvement dans la virole intérieure. Sachant qu'il y a environ plusieurs dizaines d'organes de prélèvement d'air, le délai de montage se trouve impacté. Par ailleurs, le maintien de l'organe de prélèvement lors de la rotation de la turbomachine n'est pas particulièrement efficace contre les effets de la force centrifuge.

Le document US-A1-2007/0053770 décrit un exemple de dispositif de maintien d'organes de prélèvement d'air qui sont portés par un élément de support. Ce dernier comporte un premier bras annulaire d'axe coaxial à un arbre d'entraînement de la turbomachine. Le premier bras annulaire est fixé, via un écrou, sur un deuxième bras annulaire du disque amont. Ce deuxième bras annulaire s'étend axialement en-dessous du disque amont. Une portion du premier bras est en connexion étanche avec une portion du canal d'évacuation de l'air prélevé par les organes de prélèvement d'air. Cependant, l'élément de support, l'écrou et les éléments d'étanchéité influent sur la masse de la turbomachine de par leur configuration. Tous ces éléments sont également encombrants axialement et radialement, et leur intégration dans un espace réduit est complexe, notamment au niveau de l'alésage central des disques. De plus, le maintien des organes de prélèvement n'est pas efficace, en particulier radialement, notamment lors de la rotation de la turbomachine contre les effets de la force centrifuge.

Les documents EP-A1-3135864 et US-A-5472313 décrivent également des organes de prélèvement d'air portés par des dispositifs de maintien.

### 3. Objectif de l'invention

Le présent déposant s'est donc fixé notamment comme objectif de fournir un dispositif de maintien d'un organe de prélèvement d'air centripète permettant un maintien dudit organe de prélèvement et une compacité à la fois axiaux et radiaux.

### 4. Exposé de l'invention

On parvient à cet objectif conformément à l'invention grâce à un dispositif de maintien d'un organe de prélèvement d'air centripète pour un ensemble de rotor comprenant au moins un disque de rotor amont, un disque de rotor aval adjacents et un organe de prélèvement d'air centripète, le dispositif de maintien comprenant un élément de support annulaire d'axe longitudinal qui comporte un logement d'axe radial sensiblement perpendiculaire à l'axe longitudinal et apte à recevoir l'organe de prélèvement d'air suivant une orientation radiale, l'élément de support comprenant une première extension latérale s'étendant sensiblement suivant l'axe longitudinal, le dispositif de maintien comprenant une deuxième extension latérale solidaire du disque de rotor aval, s'étendant sensiblement suivant l'axe longitudinal et disposé radialement extérieurement par rapport à la première extension, le dispositif de maintien comprenant en outre un anneau de calage agencé axialement entre une partie du disque de rotor aval et l'élément de support, l'anneau de calage étant configuré de manière à solliciter simultanément, sous l'action d'une force centrifuge, la première extension en butée radiale contre la deuxième extension et l'élément de support en butée axiale contre une partie du disque de rotor amont.

Ainsi, cette solution permet d'atteindre l'objectif susmentionné. En particulier, une telle configuration permet d'immobiliser l'organe de prélèvement axialement et radialement au moins sur un disque de rotor aval lors des effets de la force centrifuge. L'anneau de calage immobilise en particulier l'élément de support radialement sur l'élément annulaire d'un disque aval et l'extension axiale immobilise axialement l'élément de support entre le disque de rotor aval et un disque amont adjacent comprenant de préférence mais non limitativement un aménagement prévu à cet effet. Il en résulte une configuration simple et une facilité d'installation. De plus, cette configuration permet de réduire l'encombrement radial en évitant l'emploi par exemple de bride s'étendant en-dessous de disque et permet notamment un gain en masse étant donné qu'elle ne fait pas intervenir de bride ou de systèmes relativement lourd devant se fixer par exemple par des éléments filetés.

Suivant une autre caractéristique de l'invention, l'organe de calage est agencé de sorte qu'au repos, l'élément de support annulaire présente au moins un jeu radial par rapport à l'un des disque de rotor et que sous l'action de la force centrifuge, l'élément de support est en appui contre au moins l'un des disque de rotor, sans jeu. La force centrifuge permet de réduire les jeux entre l'élément de support annulaire et le dispositif de maintien pour immobilier radialement et axialement l'organe de prélèvement d'air.

Suivant une autre caractéristique, l'anneau de calage présente une section sensiblement tronconique avec une première surface tronconique en contact avec une deuxième surface correspondante de l'élément de support et une troisième surface tronconique en contact avec une quatrième surface correspondante de de la partie du disque de rotor aval. Une telle configuration permet en particulier une meilleure immobilisation radiale de l'élément de support sur le disque de rotor. De manière avantageuse, mais non limitativement, la partie annulaire du disque de rotor comprend un élément radialement annulaire.

De manière avantageuse, mais non limitativement, l'anneau de calage est ouvert par une fente. Cette configuration facilite l'installation de l'anneau de calage.

Suivant une autre caractéristique, le dispositif de maintien comprend un anneau de blocage agencé entre l'organe de prélèvement d'air et l'élément de support. Un tel anneau de blocage permet d'immobiliser axialement l'organe de prélèvement dans l'élément de support.

Suivant une autre caractéristique de l'invention, l'anneau de blocage est ouvert par une fente.

Suivant une autre caractéristique, l'anneau de blocage présente une section sensiblement en forme de T renversé avec une première et une deuxième ailes et une jambe radiale.

Suivant une caractéristique de l'invention, la jambe de l'anneau de blocage est reçue dans une gorge formée par un bras radial faisant saillie depuis une surface inférieure d'une extension axiale. Cette configuration permet un montage serré de l'organe de prélèvement d'air dans l'élément de support et de bloquer ainsi axialement l'organe de prélèvement d'air.

Suivant encore une autre caractéristique de l'invention, la première aile est en appui contre une première extrémité du bras radial et/ou la deuxième aile est en appui contre une surface radialement interne annulaire de l'embase. Cet agencement permet de bloquer radialement l'embase de l'organe de prélèvement sur l'élément annulaire porté par le disque de rotor.

De manière avantageuse, le dispositif de maintien comprend une rainure annulaire à ouverture radiale recevant la première extension.

L'invention concerne également un ensemble de rotor comprenant :
- au moins un disque de rotor amont et un disque de rotor aval adjacents et coaxiaux, le disque aval comprenant une virole radialement intérieure annulaire,
- un organe de prélèvement d'air centripète,
- un dispositif de maintien présentant l'une quelconque des caractéristiques précédentes et supportant l'organe de prélèvement d'air axialement entre le disque de rotor amont et le disque de rotor aval,
la virole radialement intérieure annulaire étant définie par la deuxième extension comprenant une rainure recevant la première extension latérale de l'élément de support.

Suivant une autre caractéristique, le disque de rotor amont comprend une proéminence destinée à coopérer avec l'extension axiale de l'élément de support de manière à immobiliser axialement l'extension axiale sur le disque de rotor amont sous l'action de la force centrifuge. Sous l'action de la force centrifuge, l'extension axiale est ainsi plaquée sur la proéminence qui permet d'immobiliser l'élément de support sur le disque de rotor amont ce qui améliore le maintien axial et la compacité axial de l'organe de prélèvement entre les deux disques adjacents.

Suivant une autre caractéristique, le disque de rotor aval comprend une virole radialement extérieure annulaire coaxial avec la virole radialement intérieure annulaire et comprenant des orifices, l'organe de prélèvement d'air étant agencé radialement en-dessous de l'élément radialement externe.

L'invention concerne également un compresseur de turbomachine comprenant un ensemble de rotor présentant l'une quelconque des caractéristiques susmentionnées.

L'invention concerne également une turbomachine comprenant un compresseur présentant les caractéristiques précédentes.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemple purement illustratif et non limitatif, en référence aux dessins schématiques annexés dans lesquels :
La figure 1 représente schématiquement en coupe axiale un exemple de turbomachine double flux à laquelle s'applique l'invention ;
La figure 2 est une vue en coupe axiale et partielle d'une turbomachine dans laquelle sont installés des organes de prélèvement d'air radial centripète portés par un dispositif de maintien selon l'invention ;
La figure 3 illustre suivant une coupe axiale un exemple d'organe de prélèvement d'air radial centripète dont le dispositif de maintien coopère avec des disques de rotor ;
La figure 4 illustre suivant une coupe axiale, partielle et de détail d'un exemple d'organe de prélèvement d'air radial centripète monté dans un logement d'un dispositif de maintien lorsque la turbomachine est à l'arrêt, sans action de la force centrifuge ;
Les figures 5 et 6 sont des vues en coupe axiale et de détail de la figure 3 ;
La figure 7 est une vue en perspective d'un exemple d'anneau de blocage selon l'invention ; et
La figure 8 est une vue en perspective d'un exemple d'anneau de calage selon l'invention.

### 6. Description de modes de réalisation de l'invention

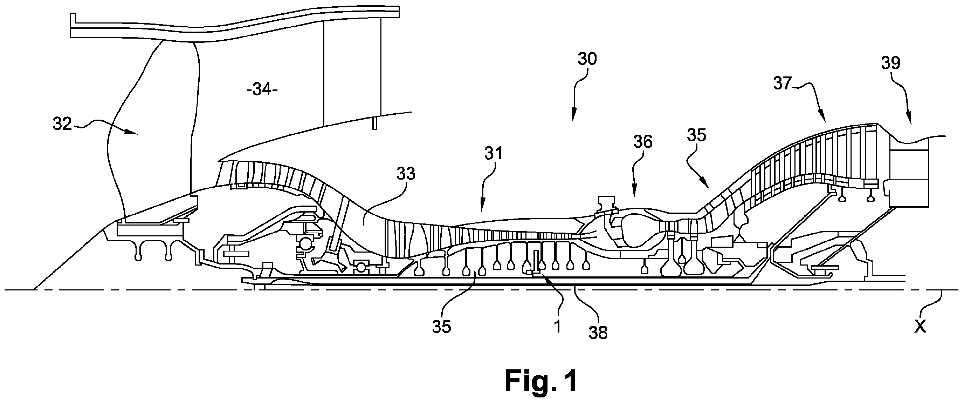

La figure 1 montre une vue en coupe axiale une turbomachine d'axe longitudinal X, et en particulier, une turbomachine double flux selon l'invention. Bien entendu, l'invention n'est pas limitée à ce type de turbomachine.

La turbomachine 30 à double flux comprend de manière générale un générateur de gaz 31 en amont duquel est montée une soufflante 32. Dans la présente invention, et de manière générale, les termes « amont » et « aval » sont définis par rapport à la circulation des gaz dans la turbomachine. La turbomachine 30 comprend une entrée d'air en amont de la soufflante 32 laquelle génère un flux d'air se séparant en un flux primaire ou flux d'air chaud circulant dans une veine primaire 33 annulaire et en un flux secondaire ou flux d'air froid circulant dans une veine secondaire 34 annulaire. Le flux d'air primaire traverse d'amont en aval un ensemble de compresseur 35, une chambre de combustion 36 et un ensemble de turbine 37 formant le générateur de gaz 31. Le flux secondaire circule autour du générateur de gaz 31. L'ensemble de compresseur 35 comprend un ou plusieurs étage(s) de compresseur(s) et l'ensemble de turbine 37 comprend un ou plusieurs étage(s) de turbine(s) qui entraîne(nt) le ou les compresseur(s) via l'intermédiaire d'arbres 38 d'entraînement et par prélèvement des gaz de combustion issus de la chambre de combustion 36. Les gaz de combustion sont expulsés dans l'atmosphère à travers une tuyère 39 participant à la poussée de la turbomachine.

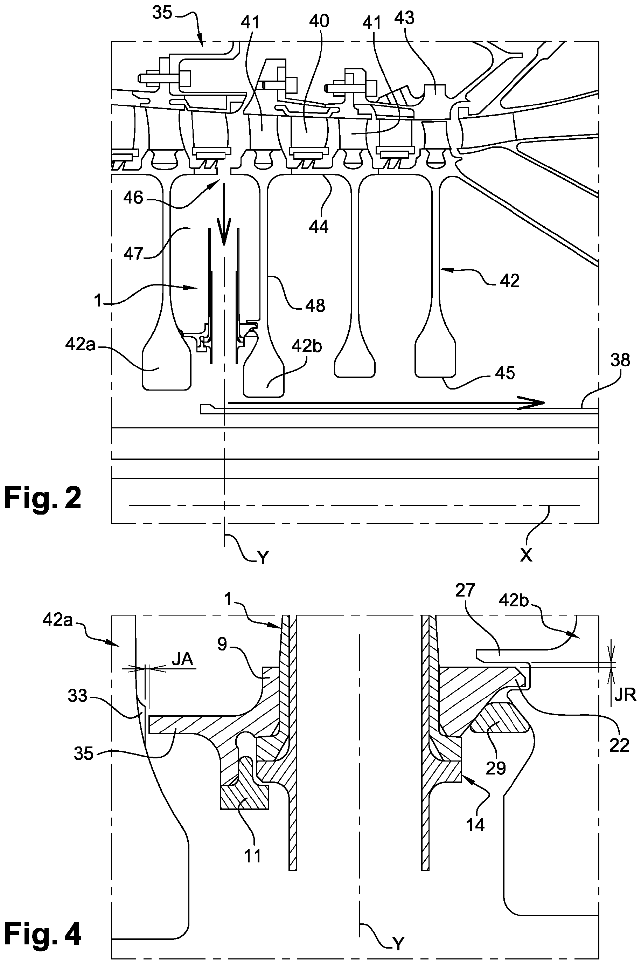

Sur la figure 2 est représenté plus précisément un rotor de compresseur 35 comprenant des rangées d'aubes de stator 40 et des rangées d'aubes mobiles 41 qui sont agencées de manière alternée axialement dans la veine primaire 33 de la turbomachine. Les aubes 40, 41 sont traversées par le flux primaire circulant dans la veine primaire. Chaque aube mobile 41 est solidaire d'un disque 42 de rotor s'étendant radialement en-dessous de la veine primaire 33. Le terme « radial » est défini par rapport à un axe Y sensiblement perpendiculaire à l'axe longitudinal X. Les termes « en-dessous », «au-dessus », « inférieur », et « supérieur » sont définis par rapport à cet axe radial Y (qui est dans le plan des figures 1 à 5). Les aubes fixes sont fixées à un carter 43 formant la paroi radialement externe de la veine primaire. Les disques 42 de rotor comprennent chacun un voile 48 annulaire s'étendant radialement et un alésage central 45 au travers duquel s'étend au moins un arbre 38, tel qu'un arbre de turbine. L'alésage central 45 est réalisé au niveau du moyeu 26 du disque lequel présente une section élargie par rapport à la paroi du voile 48. Les disques 42 de rotor comprennent chacun un élément radialement extérieur annulaire d'axe X, ici une virole radialement extérieure 44, formant une partie de la paroi radialement interne de la veine primaire. Une des viroles radialement extérieure 44 d'un disque 42 reliée à un disque adjacent, ici en amont, comprend des orifices 46 chacun d'axe radial communiquant avec la veine primaire. Les orifices 46 débouchent dans un espace annulaire 47 où sont agencés les disques 42. Sur la figure 2 est illustré un organe de prélèvement d'air centripète 1 qui est orienté radialement dans l'espace annulaire 47 de manière à prélever l'air traversant les orifices 46 pour refroidir l'arbre de turbine 38 qui entraîne le compresseur et/ou éventuellement d'autres organes à refroidir. L'organe de prélèvement est localisé en-dessous de la veine primaire 33, et en-dessous de la virole radialement extérieure 44 d'un disque 42. En particulier, plusieurs organes de prélèvement 1 sont agencés circonférentiellement autour de l'axe de la turbomachine 30 et chacun est orienté vers un orifice 46.

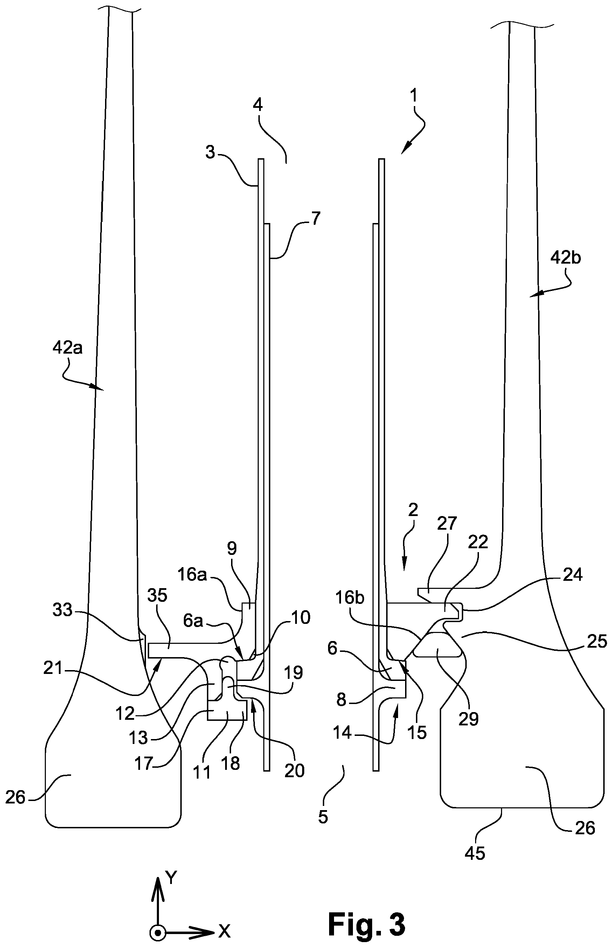

Dans la suite de la description en rapport avec la figure 3, il ne sera décrit que l'agencement d'un organe de prélèvement d'air 1. Bien entendu, les caractéristiques de cet organe de prélèvement d'air s'appliquent à tous les organes de prélèvement d'air installés dans la turbomachine. Sur la figure 3, l'organe de prélèvement 1 est maintenu dans l'espace annulaire 47 et axialement entre deux disques adjacents, ici un disque amont 42a et un disque aval 42b par un dispositif de maintien 2. Chaque organe de prélèvement 1 s'étend suivant l'axe radial et comprend une embase 14 annulaire faisant saillie axialement depuis sa paroi. L'organe de prélèvement 1 comprend un tube d'amenée d'air 3 ayant une entrée d'air 4 et une sortie d'air 5 opposées radialement. Le tube d'amenée d'air 3 comprend vers son extrémité radialement inférieure une portée 6 annulaire d'axe radial. L'organe de prélèvement d'air comprend un tube d'amortissement 7 qui est engagé dans le tube d'amenée d'air 3 de manière à absorber les effets de la force centrifuge et les vibrations apparaissant lors du fonctionnement de la turbomachine. De manière avantageuse, le tube d'amortissement 7 est formé de pétales séparés par des fentes et en appui contre la paroi interne du tube d'amenée d'air 3. Le tube d'amortissement 7 comprend également vers son extrémité radialement intérieure une collerette 8, d'axe radial venant en butée contre la portée du 6 du tube d'amenée d'air 3. La portée 6 du tube d'amenée d'air 3 et la collerette 8 du tube d'amortissement 7 définissent l'embase 14 de l'organe de prélèvement d'air. Le dispositif de maintien 2 comprend un élément de support 9 annulaire d'axe sensiblement parallèle à l'axe longitudinal X. En particulier, l'élément de support 9 comprend une paroi sensiblement cylindrique d'axe longitudinal X formant un corps principal. Ce dernier est maintenu à proximité des moyeux 26 des disques adjacents et axialement entre ceux-ci. Le dispositif de maintien 2 comprend des moyens de verrouillage configurés pour immobiliser au moins radialement et axialement l'élément de support sur au moins un des disques 42. L'élément de support 9 comporte au moins un logement 10, cylindrique, tel qu'un perçage, traversant la paroi du corps principal de l'élément de support 9 suivant l'axe radial Y. En particulier, l'élément de support 9 comprend plusieurs logements 10 ménagés dans le corps principal. La paroi formant le corps principal 9 est percée pour former les logements 10. Chaque logement 10 est destiné à recevoir un organe de prélèvement d'air suivant l'axe radial Y. L'organe de prélèvement d'air 1 est reçu dans chaque logement 10 avec un ajustement approprié pour limiter ou supprimer un degré de liberté suivant l'axe longitudinal X. Le logement 10 présente un diamètre sensiblement égal au diamètre extérieur du tube d'amenée d'air 2. L'embase 14 est en appui contre une face radialement intérieure 15 de l'élément de support 9. En particulier, la face radialement intérieure 15, forme un épaulement. La face radialement intérieure 15, sphérique, est de préférence de forme complémentaire avec une surface radialement externe 6a de la portée 6. La face radialement intérieure 15 et la surface radialement externe 6a sont en contact. Leur complémentarité permet d'optimiser leur coopération et de limiter le degré de liberté de l'organe de prélèvement d'air par rapport à l'axe longitudinal X. La portée 6 du tube d'amenée d'air et la collerette 8 du tube d'amortissement sont disposées radialement en partie inférieure de l'élément de support 9. En particulier, la portée 6 du tube d'amenée d'air est en appui contre la face radialement intérieure 15 de l'élément de support 9.

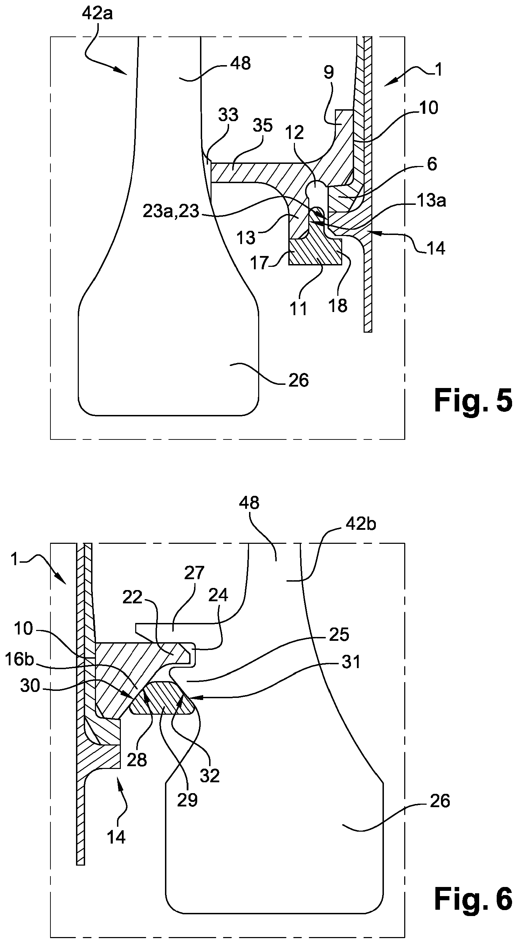

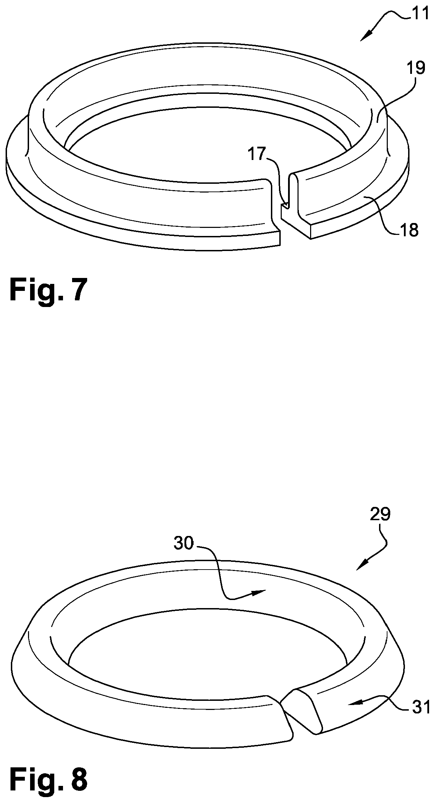

En référence aux figures 3 et 5, les moyens de verrouillage comprennent un anneau de blocage 11, qui permet un maintien et/ou un montage serré de l'organe de prélèvement 1 dans le logement 10 et empêche que l'organe de prélèvement 1 ne glisse radialement vers l'intérieur du compresseur. En d'autres termes, l'anneau de blocage 11 permet un verrouillage radial de l'organe de prélèvement 1 par rapport à l'élément de support 9. L'anneau de blocage 11 permet également un meilleur maintien de l'organe de prélèvement d'air en l'immobilisant radialement sur l'élément de support 9 sous l'action de la force centrifuge. Comme représenté plus précisément sur la figure 7, l'anneau de blocage 11 présente une section transversale en forme de T renversé. Celui-ci comprend une première aile 17 et une deuxième aile 18 ainsi qu'une jambe 19 annulaire. La jambe 19 annulaire s'étend suivant l'axe radial Y. La première aile 17 est apte à être en appui contre une face d'une extrémité libre d'un bras 13 annulaire de l'élément de support 9 selon l'état ou non de fonctionnement de la turbomachine. Quant à la deuxième aile 18, celle-ci est apte à être en appui contre une surface radialement interne 20 annulaire de l'embase 14, ici de la collerette 8 du tube d'amortissement 7, selon l'état ou non de fonctionnement de la turbomachine. Une partie de l'embase 14 est, après montage, radialement agencée entre le corps principal de l'élément de support 9 et l'anneau de blocage 11. Le bras 13 s'étend radialement et intérieurement (vers l'axe longitudinal X de la turbomachine) depuis une surface intérieure 21 d'une extension axiale 35 de l'élément de support 9 faisant office de moyen de verrouillage. L'extension axiale 35 s'étend depuis un premier flanc 16a du corps principal de l'élément de support 9. Le bras 13 radial s'étend dans un plan décalé et sensiblement parallèle à celui du premier flanc 16a de telle manière que, une fois l'organe de prélèvement d'air 1 assemblé dans un logement 10, l'organe de prélèvement d'air 1, et en particulier son embase 14, est à distance de la portion du bras radial 13. En d'autres termes, le bras 13 radial est disposé à distance axialement de l'embase 14 de l'organe de prélèvement d'air 1. Une gorge 12 est ainsi formée entre le bras 13 radial et l'embase 14. Une partie de l'anneau de blocage 11 est agencée de telle sorte que l'embase 14 soit maintenue au moins à faible distance ou au contact de la face radialement intérieure 15 sans action de la force centrifuge (rotor non tournant). Sous l'action de la force centrifuge, l'embase 14 est plaquée contre la face radialement intérieure 15. La jambe 19 annulaire de l'anneau de blocage 11 est agencée dans la gorge 12, et en particulier entre une face radialement interne 13a du bras 13 et un bord 23. La face radialement interne 13a du bras 13 est orientée vers l'embase 14 de l'organe de prélèvement 1. Le bord 23 est formé par les surfaces externes de la collerette 8 et de la portée 6. Le bord 23 de l'embase 14 comprend un méplat 23a avec lequel la jambe 19 de l'anneau de blocage coopère de sorte à limiter le degré de liberté de rotation, par rapport à l'axe radial Y, de l'organe de prélèvement par rapport à l'élément de support 9.De manière avantageuse, mais non limitativement, l'anneau de blocage 11 est fendu de manière à faciliter son installation. En d'autres termes, l'anneau de blocage 11 est ouvert par une fente séparant deux extrémités libres de l'anneau 11. L'anneau de blocage 11 est réalisé dans un matériau métallique. Un exemple de matériau métallique ou d'un alliage à base d'un matériau métallique est un inconel^{®} 718 ou un alliage de titane tel qu'un Ti17 en fonction des caractéristiques mécaniques souhaitées et de la température du compresseur.

En références aux figures 3 et 6, l'élément de support 9 comprend une première extension latérale 22 qui s'étend axialement. La première extension est en saillie depuis un deuxième flanc 16b annulaire. Ce dernier est opposé axialement au premier flanc 16a. La première extension 22 latérale est opposée axialement à l'extension axiale 35. Dans le présent exemple, la première extension 22 latérale s'étend dans un plan sensiblement décalé radialement par rapport à celui de l'extension axiale 35. Le plan de la première extension 22 s'étend radialement au-dessus de celui de l'extension axiale 35. Cette première extension 22 est, dans cet exemple de réalisation, reçue et logée dans une rainure 24 annulaire à ouverture latérale du disque aval 42b. De préférence, mais non limitativement, la première extension est logée avec jeu dans la rainure 24 de manière à autoriser sa dilatation comme illustré sur la figure 4. Plus précisément, la rainure 24 est formée par une nervure 25 s'étendant axialement depuis une face latérale du disque 42, ici le disque aval 42b et radialement en-dessous d'une deuxième extension latérale, ici une virole radialement intérieure 27 annulaire du disque aval 42b. La virole radialement intérieure 27 est coaxiale avec la virole radialement extérieure 44. Celle-ci est orientée vers l'organe de prélèvement d'air lorsque ce dernier est monté dans un des logements 10. La première extension 22 est montée à une faible distance de la virole radialement intérieure 27 (rotor non tournant). Plus précisément, comme énoncé précédemment et illustré sur la figure 4, un jeu radial JR est prévu entre la première extension et la deuxième extension 27. Le deuxième flanc 16b présente une surface tronconique 28. La surface tronconique 28 est inclinée d'un angle prédéterminé par rapport à l'axe radial Y. L'angle α prédéterminé est compris entre 35° et 50°.

Le dispositif de maintien 2 comprend en outre un anneau de calage 29 agencé axialement entre une partie du disque de rotor aval 42b et l'élément de support 9. En particulier, l'anneau de calage est monté axialement entre la nervure 25 et l'élément de support. Cet anneau de calage 29 est configuré de manière à immobiliser radialement la première extension 22 sur la virole 27, sous l'action de la force centrifuge lorsque la turbomachine est en fonctionnement. Pour cela, l'anneau de calage 29 présente une section sensiblement tronconique. Au moins deux surfaces de l'anneau de calage 29 coopèrent avec des surfaces correspondantes de l'élément de support 9 et du disque 42. L'anneau de calage 29, plus précisément illustré sur la figure 8, présente plus précisément une première surface 30 tronconique, amont, en contact avec une deuxième surface correspondante, définie ici par la surface tronconique 28 du deuxième flanc 16b. L'anneau de calage 29 comprend une troisième surface 31 tronconique en contact avec une quatrième surface 32 correspondante du disque 42. Cette quatrième surface 32 est portée par le rebord de la nervure 25 du disque aval 42b. Les troisième et quatrième surfaces tronconiques sont disposées l'une en regard de l'autre. L'anneau de calage 29 avec ses surfaces tronconiques 30, 31 est agencé entre celles-ci. Les surfaces tronconiques 30, 31 de l'anneau de calage permettent également d'ajuster le positionnement de l'anneau de calage entre le disque et l'élément de support 9. De manière avantageuse, l'anneau de calage 29 est fendu de manière à faciliter son installation. En d'autres termes, l'anneau de calage 29 est ouvert par une fente séparant deux extrémités libres de l'anneau 29. De préférence, mais non limitativement, l'anneau de calage est réalisé dans un matériau métallique. Un exemple de matériau métallique ou d'alliage à base d'un matériau métallique est un inconel 718 ou un alliage de titane tel qu'un Ti17 en fonction des caractéristiques mécaniques souhaitées et de la température du compresseur.

Comme cela est visible sur les figures 3 et 5, l'extension axiale 35 est agencée en regard du disque amont 42a. En particulier, le disque 42a amont comprend une proéminence 33 s'étendant axialement depuis une face interne du disque 42b amont La Celle-ci est orientée vers l'organe de prélèvement d'air lorsque celui-ci est monté dans un des logements de l'élément de support 9. La proéminence 33 est localisée à proximité du moyeu 26 du disque amont 42b. L'extension axiale 35 est en vis-à-vis de cette proéminence 33. Cette dernière a une section de forme sensiblement triangulaire. En particulier, la proéminence 33 présente une épaisseur croissante suivant une direction radiale, perpendiculaire à l'axe radial Y.

Comme nous pouvons le voir sur la figure 4, au montage, la première extension 22 est, au repos, en chevauchement axial avec la deuxième extension 27. En particulier, l'élément de support 9 est monté avec au moins un jeu radial JR rapport au disque aval 42b. La première extension 22 est à faible distance radiale avec la deuxième extension 27. Un jeu axial JA est également prévu entre l'élément de support 9 et le disque amont 42a. L'extrémité libre de l'extension axiale 35 est à distance axialement de la proéminence 33du disque amont 42a.

Lors du fonctionnement de la turbomachine, la résultante de la force centrifuge passant par les première et troisième surfaces tronconiques 30, 31 de l'anneau de support 29 permettent que cette dernière immobilise la première extension 22 dans la rainure 24 et en particulier radialement contre la virole radiale intérieure 27 sous l'action de la force centrifuge. Simultanément, l'extension axiale 35 de l'élément de support 9, vient se plaquer sur la portion la plus épaisse de la proéminence 33 de sorte à immobiliser axialement l'élément de support 9 sur le disque 42a amont. Les jeux radial JR et axial JA entre l'élément de support 9 et les disques de rotor 42a, 42b sont réduits, voire supprimés. Cet agencement présente ainsi une compacité axiale et radiale ainsi qu'un bon maintien axial et radial lors du fonctionnement de la turbomachine.

## Revendications

1. Dispositif de maintien (2) d'un organe de prélèvement d'air (1) centripète pour un ensemble de rotor comprenant au moins un disque de rotor amont (42a), un disque de rotor aval (42b) adjacents et un organe de prélèvement d'air (1) centripète, le dispositif de maintien (2) comprenant un élément de support (9) annulaire d'axe longitudinal (X) qui comporte un logement (10) d'axe radial (Y) sensiblement perpendiculaire à l'axe longitudinal (X) et apte à recevoir l'organe de prélèvement d'air (1) suivant une orientation radiale, l'élément de support (9) comprenant une première extension (22) latérale s'étendant sensiblement suivant l'axe longitudinal (X), et une deuxième extension (27) latérale solidaire du disque de rotor aval (42b), s'étendant sensiblement suivant l'axe longitudinal (X), et disposée radialement extérieurement par rapport à la première extension (22), **caractérisé en ce que** le dispositif de maintien (2) comprend en outre un anneau de calage (29) agencé axialement entre une partie du disque de rotor aval (42b) et l'élément de support (9), l'anneau de calage (29) étant configuré de manière à solliciter simultanément, sous l'action d'une force centrifuge, la première extension (22) en butée radiale contre la deuxième extension (27) et l'élément de support (9) en butée axiale contre une partie du disque de rotor amont (42a).

2. Dispositif de maintien (2) selon la revendication principale, **caractérisé en ce que** l'organe de calage (29) est agencé de sorte qu'au repos, l'élément de support annulaire présente au moins un jeu radial (JR) par rapport à l'un des disques de rotor et que sous l'action de la force centrifuge, l'élément de support (9) est en appui contre au moins l'un des disque de rotor, sans jeu.

3. Dispositif de maintien (2) selon l'une quelconque des revendications précédentes, **caractérisé en ce que** l'anneau de calage (29) présente une section sensiblement tronconique avec une première surface (30) tronconique en contact avec une deuxième surface (28) correspondante de l'élément de support (9) et une troisième surface (31) tronconique en contact avec une quatrième surface (32) correspondante de la partie du disque de rotor aval.

4. Dispositif de maintien (2) selon l'une quelconque des revendications précédentes, **caractérisé en ce que** l'anneau de calage (29) est ouvert par une fente.

5. Dispositif de maintien (2) selon l'une quelconque des revendications précédentes, **caractérisé en ce qu'**il comprend un anneau de blocage (11) agencé entre l'organe de prélèvement d'air (1) et l'élément de support (9).

6. Dispositif de maintien (2) selon la revendication précédente, **caractérisé en ce que** l'anneau de blocage (11) est ouvert par une fente.

7. Dispositif de maintien (2) selon l'une quelconque des revendications 5 et 6, **caractérisé en ce que** l'anneau de blocage (11) présente une section sensiblement en forme de T renversé avec une première et une deuxième ailes (17, 18) et une jambe radiale (19).

8. Dispositif de maintien (2) selon la revendication précédente, **caractérisé en ce que** la jambe (19) de l'anneau de blocage (11) est reçue dans une gorge (12) formée par un bras (13) radial faisant saillie depuis une surface inférieure (14) d'une extension axiale (35) et l'embase.

9. Dispositif de maintien (2) selon l'une quelconque des revendications 7 et 8, **caractérisé en ce que** la première aile (17) est en appui contre une extrémité libre du bras (13) radial et/ou la deuxième aile (18) est en appui contre une surface radialement interne (20) annulaire de l'embase (14).

10. Ensemble de rotor comprenant :
- au moins un disque de rotor (42a) amont et un disque de rotor (42b) aval adjacents et coaxiaux, le disque de rotor (42b) aval comprenant une virole radialement intérieure annulaire,
- un organe de prélèvement d'air (1) centripète,
- un dispositif de maintien (2) selon l'une quelconque des revendications précédentes supportant l'organe de prélèvement d'air (1) axialement entre le disque de rotor (42a) amont et le disque de rotor (42b) aval,
la virole radialement intérieure étant la deuxième extension (27) comprenant une rainure recevant la première extension (22) latérale de l'élément de support (9).

11. Ensemble selon la revendication précédente, **caractérisé en ce que** le disque de rotor (42a) amont comprend une proéminence (33) destinée à coopérer avec l'extension axiale (35) de l'élément de support (9) de manière à immobiliser axialement l'extension axiale (35) sur le disque de rotor (42a) amont sous l'action de la force centrifuge.

12. Ensemble selon l'une quelconque des revendications 10 et 11, **caractérisé en ce que** le disque (42b) de rotor aval comprend une virole radialement extérieure (44) annulaire coaxial avec la virole radialement intérieure annulaire et comprenant des orifices (46), l'organe de prélèvement d'air (1) étant agencé radialement en-dessous de l'élément radialement externe (44).

13. Compresseur de turbomachine comprenant un ensemble de rotor selon l'une des revendications 10 à 12.

14. Turbomachine (30) comprenant un compresseur selon la revendication précédente.

## Patentansprüche

1. Vorrichtung zum Halten (2) eines zentripetalen Luftentnahmeorgans (1) für eine Rotoranordnung, umfassend mindestens eine stromaufwärts gelegene Rotorscheibe (42a), eine benachbarte stromabwärts gelegene Rotorscheibe (42b) und ein zentripetales Luftentnahmeorgan (1), wobei die Vorrichtung zum Halten (2) ein ringförmiges Stützelement (9) mit einer Längsachse (X) umfasst, das eine Aufnahme (10) mit einer radialen Achse (Y), die im Wesentlichen senkrecht zu der Längsachse (X) verläuft, umfasst, die geeignet ist, das Luftentnahmeorgan (1) gemäß einer radialen Ausrichtung aufzunehmen, wobei das Stützelement (9) eine erste seitliche Verlängerung (22) umfasst, die sich im Wesentlichen gemäß der Längsachse (X) erstreckt, und eine zweite seitliche Verlängerung (27), die fest mit der stromabwärts gelegenen Rotorscheibe (42b) verbunden ist, die sich im Wesentlichen gemäß der Längsachse (X) erstreckt, und die in Bezug auf die erste Verlängerung (22) radial außerhalb angeordnet ist, **dadurch gekennzeichnet, dass** die Vorrichtung zum Halten (2) weiter einen Feststellring (29) umfasst, der axial zwischen einem Teil der stromabwärts gelegenen Rotorscheibe (42b) und dem Stützelement (9) angeordnet ist, wobei der Feststellring (29) so ausgestaltet ist, dass gleichzeitig, unter der Wirkung einer Zentrifugalkraft, die erste Verlängerung (22) radial anschlagend gegen die zweite Verlängerung (27) und das Stützelement (9) axial anschlagend gegen einen Teil der stromaufwärts gelegenen Rotorscheibe (42a) beansprucht werden.

2. Vorrichtung zum Halten g (2) nach dem Hauptanspruch, **dadurch gekennzeichnet, dass** das Feststellorgan (29) so angeordnet ist, dass in Ruhestellung das ringförmige Stützelement mindestens ein radiales Spiel (JR) in Bezug auf eine der Rotorscheiben aufweist und dass, unter der Wirkung der Zentrifugalkraft, das Stützelement (9) gegen mindestens eine der Rotorscheiben drückt, ohne Spiel.

3. Vorrichtung zum Halten (2) nach einem der vorstehenden Ansprüche, **dadurch gekennzeichnet, dass** der Feststellring (29) einen im Wesentlichen kegelstumpfförmigen Querschnitt mit einer ersten kegelstumpfförmigen Oberfläche (30) in Kontakt mit einer zweiten entsprechenden Oberfläche (28) des Stützelements (9) und einer dritten kegelstumpfförmigen Oberfläche (31) in Kontakt mit einer vierten entsprechenden Oberfläche (32) des Teils der stromabwärts gelegenen Rotorscheibe aufweist.

4. Vorrichtung zum Halten (2) nach einem der vorstehenden Ansprüche, **dadurch gekennzeichnet, dass** der Feststellring (29) durch einen Schlitz offen ist.

5. Vorrichtung zum Halten (2) nach einem der vorstehenden Ansprüche, **dadurch gekennzeichnet, dass** sie einen Sperrring (11) umfasst, der zwischen dem Luftentnahmeorgan (1) und dem Stützelement (9) angeordnet ist.

6. Vorrichtung zum Halten (2) nach dem vorstehenden Anspruch, **dadurch gekennzeichnet, dass** der Sperrring (11) durch einen Schlitz offen ist.

7. Vorrichtung zum Halten (2) nach einem der Ansprüche 5 und 6, **dadurch gekennzeichnet, dass** der Sperrring (11) einen Querschnitt im Wesentlichen in Form eines umgekehrten T mit einem ersten und einen zweiten Flügel (17, 18) und einem radialen Schenkel (19) aufweist.

8. Vorrichtung zum Halten (2) nach dem vorstehenden Anspruch, **dadurch gekennzeichnet, dass** der Schenkel (19) des Sperrrings (11) in einer Nut (12) aufgenommen wird, die von einem radialen Arm (13) gebildet wird, der ausgehend von einer unteren Oberfläche (14) einer axialen Verlängerung (35) und dem Sockel hervorsteht.

9. Vorrichtung zum Halten (2) nach einem der Ansprüche 7 und 8, **dadurch gekennzeichnet, dass** der erste Flügel (17) gegen ein freies Ende des radialen Arms (13) drückt und/oder der zweite Flügel (18) gegen eine ringförmige radial innere Oberfläche (20) des Sockels (14) drückt.

10. Rotoranordnung, umfassend:
- mindestens eine stromaufwärts gelegene Rotorscheibe (42a) und eine stromabwärts gelegene Rotorscheibe (42b), die benachbart und koaxial sind, wobei die stromabwärts gelegene Rotorscheibe (42b) einen ringförmigen radial inneren Mantel umfasst,
- ein zentripetales Luftentnahmeorgan (1),
- eine Vorrichtung zum Halten (2) nach einem der vorstehenden Ansprüche, die das Luftentnahmeorgan (1) axial zwischen der stromaufwärts gelegenen Rotorscheibe (42a) und der stromabwärts gelegenen Rotorscheibe (42b) stützt,
wobei der radial innere Mantel die zweite Verlängerung (27) ist, umfassend eine Rille, die die erste seitliche Verlängerung (22) des Stützelements (9) aufnimmt.

11. Anordnung nach dem vorstehenden Anspruch, **dadurch gekennzeichnet, dass** die stromaufwärts gelegene Rotorscheibe (42a) einen Vorsprung (33) umfasst, der dazu bestimmt ist, mit der axialen Verlängerung (35) des Stützelements (9) zusammenzuwirken, um die axiale Verlängerung (35) auf der stromaufwärts gelegenen Rotorscheibe (42a) unter der Wirkung der Zentrifugalkraft axial zu blockieren.

12. Anordnung nach einem der Ansprüche 10 und 11, **dadurch gekennzeichnet, dass** die stromabwärts gelegene Rotorscheibe (42b) einen ringförmigen radial äußeren Mantel (44) umfasst, der mit dem ringförmigen radial inneren Mantel koaxial ist und Öffnungen (46) umfasst, wobei das Luftentnahmeorgan (1) radial unterhalb des radial äußeren Elements (44) angeordnet ist.

13. Kompressor einer Turbomaschine, umfassend eine Rotoranordnung nach einem der Ansprüche 10 bis 12.

14. Turbomaschine (30), umfassend einen Kompressor nach dem vorstehenden Anspruch.

## Claims

1. Holding device for holding (2) a centripetal air sampling member (1) for a rotor assembly comprising at least one upstream rotor disc (42a), an adjacent downstream rotor disc (42b) and a centripetal air sampling member (1), the holding device (2) comprising an annular support element (9) with a longitudinal axis (X), which comprises a radial axis (Y) housing (10) substantially perpendicular to the longitudinal axis (X) and intended to receive the air sampling member (1) following a radial orientation, the support element (9) comprising a first lateral extension (22) extending substantially following the longitudinal axis (X), and a second lateral extension (27) integral with the downstream rotor disc (42b), extending substantially along the longitudinal axis (X), and arranged radially externally with respect to the first extension (22), **characterised in that** the holding device (2) further comprises a wedging ring (29) arranged axially between a portion of the downstream rotor disc (42b) and the support element (9), the wedging ring (29) being configured so as to simultaneously urge, under the action of a centrifugal force, the first extension (22) in radial abutment against the second extension (27) and the support element (9) in axial abutment against a portion of the upstream rotor disc (42a).

2. Holding device (2) according to the main claim, **characterised in that** the wedging ring (29) is arranged such that when idle, the annular support element presents at least one radial clearance (JR) with respect to one of the rotor discs and that under the action of the centrifugal force, the support element (9) bears against at least one of the rotor discs, without any clearance.

3. Holding device (2) according to any one of the preceding claims, **characterised in that** the wedging ring (29) presents a substantially truncated cross-section with a first truncated surface (30) in contact with a corresponding second surface (28) of the support element (9) and a third truncated surface (31) in contact with a fourth corresponding surface (32) of the portion of the downstream rotor disc.

4. Holding device (2) according to any one of the preceding claims, **characterised in that** the wedging ring (29) is opened by a slot.

5. Holding device (2) according to any one of the preceding claims, **characterised in that** it comprises a locking ring (11) arranged between the air sampling member (1) and the support element (9).

6. Holding device (2) according to the preceding claim, **characterised in that** the locking ring (11) is opened by a slot.

7. Holding device (2) according to any one of claims 5 and 6, **characterised in that** the locking ring (11) presents a substantially inverted T-shaped cross-section with a first and a second wing (17, 18) and a radial leg (19).

8. Holding device (2) according to the preceding claim, **characterised in that** the leg (19) of the locking ring (11) is received in a groove (12) formed by a radial arm (13) protruding from a lower surface (14) of an axial extension (35) and the base.

9. Holding device (2) according to any one of claims 7 and 8, **characterised in that** the first wing (17) bears against a free end of the radial arm (13) and/or the second wing (18) bears against a radially inner annular surface (20) of the base (14).

10. Rotor assembly comprising:
- at least one adjacent and coaxial upstream rotor disc (42a) and one downstream rotor disc (42b), the downstream rotor disc (42b) comprising a radially inner annular ferrule,
- a centripetal air sampling member (1),
- a holding device (2) according to any one of the preceding claims, supporting the air sampling member (1) axially between the upstream rotor disc (42a) and the downstream rotor disc (42b),
the radial inner ferrule being the second extension (27) comprising a groove receiving the first lateral extension (22) of the support element (9).

11. Assembly according to the preceding claim, **characterised in that** the upstream rotor disc (42a) comprises a prominence (33) intended to co-operate with the axial extension (35) of the support element (9) so as to axially immobilise the axial extension (35) on the upstream rotor disc (42a) under the action of the centrifugal force.

12. Assembly according to any one of claims 10 and 11, **characterised in that** the downstream rotor disc (42b) comprises a radially outer annular ferrule (44), coaxial with the radially inner annular ferrule and comprising orifices (46), the air sampling member (1) being arranged radially below the radially outer element (44).

13. Turbine engine compressor comprising a rotor assembly according to one of claims 10 to 12.

14. Turbine engine (30) comprising a compressor according to the preceding claim.
